# FASCICULE DE BREVET EUROPEEN

(11) **EP 1 095 689 B1**
(45) Date de publication et mention de la délivrance du brevet: **24.01.2007**
(21) Numéro de dépôt: 00402649.8
(22) Date de dépôt: 25.09.2000
(51) Int. Cl.: B01D 53/04, B01D 53/047, C01B 13/02, F16K 41/00, F16K 17/00

(54) **Installation de traitement cyclique de fluide par adsorption avec vannes à étanchéité améliorée**
Vorrichtung zur zyklischen Behandlung eines Fluids durch Adsorption, die Ventile mit verbesserter Dichtigkeit enthält
Installation for cyclic treatment of fluid by adsorption, comprising valves with improved tightness

(30) Priorité: 28.10.1999 FR 9913517
(43) Date de publication de la demande: 02.05.2001
(73) Titulaire: L'air Liquide, S.A. à Directoire et Conseil de Surveillance pour l'Etude et l'Exploitation des Procédés Georges Claude, 75321 Paris Cedex 07 (FR)
(72) Inventeur: Monereau, Christian, 75011 Paris (FR); Belot, Jean-Marc, 94210 St Maur (FR)
(74) Mandataire: Pittis, Olivier

(56) Documents cités:
- FR-A- 2 455 233
- US-A- 5 223 004

## Description

L'invention concerne une installation et un procédé de traitement cyclique de fluide par adsorption avec mise en oeuvre, durant une partie du cycle de traitement du fluide, d'une pression inférieure à la pression atmosphérique, en particulier un procédé type VSA de séparation et/ou de purification d'un flux gazeux contenant essentiellement de l'oxygène et de l'azote, tel l'air.

Il est connu que les gaz et les mélanges gazeux trouvent de nombreuses applications au plan industriel. Ainsi, les gaz de l'air, tels notamment l'oxygène et l'azote, sont couramment utilisés dans de nombreux domaines, tel notamment le domaine de l'électronique, le domaine de la combustion, le domaine médical, le domaine alimentaire, le domaine du soudage.....

Actuellement, l'une des techniques utilisées pour produire ou purifier les gaz, en particulier les gaz de l'air, est la technique dite "PSA" (Pressure Swing Adsorption), c'est-à-dire adsorption avec variations de pression.

Selon cette technique PSA, lorsque le mélange gazeux à séparer est, par exemple, de l'air et que le composant à récupérer est l'oxygène, par exemple, ledit oxygène est séparé du mélange gazeux que constitue l'air ambiant grâce à une adsorption préférentielle d'au moins l'azote sur un ou plusieurs matériaux adsorbant préférentiellement au moins l'azote et soumis à des cycles de pression donnée dans une ou plusieurs zones de séparation, en général un ou des adsorbeurs.

L'oxygène qui ne s'adsorbe pas ou peu est récupéré en sortie de la ou des zones de séparation à une pureté, en général, supérieure à 90 %.

En d'autres termes, la technique de l'adsorption est couramment utilisée pour séparer les différents constituants d'un mélange gazeux, de manière à produire directement, dans le cas de l'air, de l'oxygène et/ou de l'azote relativement pur ou, selon le cas, d'en éliminer certaines impuretés, par exemple la vapeur d'eau, le dioxyde de carbone, les oxydes d'azote, les traces éventuelles d'hydrocarbures... dont la présence peut nuire au bon fonctionnement des équipements situés en aval, telles que des unités de fractionnement d'air par voie cryogénique, par exemple.

De façon plus générale, un procédé PSA de séparation d'un mélange gazeux comprenant un premier composé s'adsorbant préférentiellement sur un matériau adsorbant et un deuxième composé s'adsorbant moins préférentiellement sur ledit matériau adsorbant que ledit premier composé, en vue de la production dudit deuxième composé, comprend de manière cyclique :
- une étape d'adsorption préférentielle d'au moins ledit premier composé sur ledit matériau adsorbant, à une pression d'adsorption dite "pression haute", avec récupération d'au moins une partie du deuxième composé ainsi produit;
- une étape de désorption du premier composé ainsi piégé par l'adsorbant, à une pression de désorption inférieure à la pression d'adsorption, dite "pression basse";
- une étape de recompression de la zone de séparation comprenant l'adsorbant, par passage de ladite pression basse à ladite pression haute.

Dit autrement, dans les installations industrielles basées sur la technique de l'adsorption, un flux gazeux à traiter s'écoule à travers un ou plusieurs lits d'adsorbants. Après un certain temps de fonctionnement, les matériaux adsorbants sont saturés et ne sont donc plus aptes à fixer de nouvelles molécules de gaz.

Il est alors nécessaire de procéder à la régénération du ou des lits d'adsorbant. Pour ce faire, plusieurs techniques de régénération ou de désorption sont utilisables, par exemple l'élévation de température, l'abaissement de la pression, l'élution par un gaz de balayage.... ces diverses techniques pouvant être utilisées conjointement ou successivement, si nécessaire.

Actuellement, de nombreux procédés mettent en oeuvre une pression de régénération inférieure à la pression atmosphérique, c'est-à-dire inférieure à 1 bar (10⁵ Pa). Une telle technique qui constitue un cas particulier de procédé PSA est habituellement appelée technique ou procédé "VPSA" (Vacuum "Pressure" Swing Adsorption) ou plus simplement appelée procédé "VSA" (Vacuum Swing Adsorption), c'est-à-dire adsorption avec variation de pression et mise sous vide.

A titre d'exemple, on peut citer :
- le document US-A-5,042,994 décrivant un procédé de séparation des gaz de l'air comprenant une pression de désorption inférieure à la pression atmosphérique, destinée à la coproduction d'azote de haute pureté et d'oxygène moyenne pureté,
- le document US-A-5,156,657 portant sur un procédé PSA pour éliminer l'eau et le CO₂ présents dans un flux d'air, avec mise en oeuvre d'une étape de purge sous vide,
- le document US-A-5,395,427 concernant un procédé PSA avec deux étages d'adsorption pour la production d'oxygène de haute pureté avec mise sous vide des deux étages d'adsorption au cours d'un cycle de production,
- le document US-A-5,463,869 ayant trait à un procédé intégré adsorption/distillation cryogénique pour la séparation d'air avec mise en oeuvre d'un cycle de type VSA pendant ladite séparation, et
- le document US-A-5,785,740 portant sur cycle trans-atmosphérique de production, en particulier, d'oxygène.

Il apparaît donc que, comme le montrent ces documents, la mise en oeuvre dans un procédé PSA d'étapes de mise sous vide, c'est-à-dire à une pression inférieure à la pression atmosphérique, de manière à obtenir un procédé VSA, est connu et classique.

Actuellement, les matériaux zéolitiques sont les adsorbants les plus utilisés dans les installations de séparation ou de purification de gaz mettant en oeuvre un procédé de type PSA ou VSA. De telles zéolites sont notamment décrites dans les documents EP-A-486384, EP-A-606848, EP-A-589391, EP-A-589406, EP-A-548755, US-A-268023, EP-A-109063, EP-A-827771 et EP-A-760248.

Cependant, ces adsorbants, en particulier les zéolites, présentent une très grande sensibilité aux polluants de toute nature susceptibles de venir les contaminer et les inactiver, notamment les polluants présents dans l'air atmosphérique.

Ainsi, il est connu que, dans les unités de traitement d'air, les traces d'eau diminuent considérablement les performances des zéolites utilisées soit pour arrêter le CO₂ avant séparation cryogénique de l'air, soit pour arrêter l'azote lorsque l'on souhaite produire de l'oxygène.

C'est pour cette raison que l'on dispose habituellement, en entrée des adsorbeurs servant à la séparation d'air, une couche d'un adsorbant adapté à l'élimination de l'eau, laquelle est suivie d'une ou plusieurs couches d'un ou plusieurs adsorbants plus spécifiquement destinés à arrêter le composé gazeux à éliminer, par exemple le CO₂, l'azote ou d'autres composés gazeux, selon le cas considéré, comme expliqué ci-dessus. Classiquement, la couche d'adsorbant adapté à l'élimination de l'eau est, par exemple, une couche d'alumine activée, éventuellement dopée, ou du gel de silice, voire une zéolite présentant une affinité élevée pour l'eau et régénérable dans les conditions normales de fonctionnement de l'unité.

Il est également connu d'effectuer des régénérations périodiques par élévation de la température et d'effectuer, en outre, des régénérations dites exceptionnelles à température plus élevée que la température nominale de régénération afin d'éliminer les traces d'humidité qui sont susceptibles de s'accumuler dans l'adsorbant, c'est-à-dire dans la zéolite, au cours du temps et malgré les phases de régénération périodiques.

En général, ces régénérations se font avec un débit de régénération réduit profitant ainsi de la puissance installée du réchauffeur pour obtenir une température de sortie plus élevée, par exemple 250°C au lieu de 150°C en fonctionnement normal, et atteindre après balayage du lit d'adsorbant un taux d'humidité résiduelle très faible permettant d'utiliser de manière optimale la zéolite.

Dans le même domaine, le document FR-A-9409162 divulgue un dispositif anti-pollution permettant d'éviter toute entrée d'humidité au niveau des zéolites pendant les phases d'arrêt des unités d'adsorption.

Pour ce faire, lors des arrêts, on isole chaque adsorbeur et on met son entrée en communication libre avec l'atmosphère.

En outre, chaque adsorbeur, qui est sous vide durant chaque arrêt, est ramené à la pression atmosphérique par introduction dans celui-ci d'un gaz pratiquement sec et préférentiellement par le gaz de production.

De cette façon, tous les échanges gazeux résiduels avec l'atmosphère, dus aux variations de température des adsorbants par exemple, se font à travers le lit servant à la dessiccation du gaz à traiter et donc sans dommage pour la zéolite située en aval.

L'application industrielle des dispositifs, installations et procédés décrits ci-dessus a ainsi permis de conduire à des performances quasiment inchangées sur des périodes de plusieurs années, notamment en vue de la production d'oxygène par adsorption, ou pour lesquelles, dans les cas extrêmes, la baisse de performance n'était que de quelques pour cents, c'est-à-dire industriellement acceptable.

Il s'avère néanmoins que sur les unités de nouvelle génération, le vieillissement semble s'être accéléré et que, dès les premières années de fonctionnement, on observe une diminution notable des performances.

Compte tenu des conséquences économiques négatives liées à cette dégradation, ce phénomène nouveau a fait l'objet d'études poussées pour en déterminer la cause.

Ainsi, il a été établi, à partir de prélèvements statistiques d'échantillons d'adsorbants sur des unités industrielles, que la baisse de performances était attribuable à la présence de traces d'eau dans la zéolite, certes en quantité limitée mais toutefois supérieure à celle mesurée lors du démarrage de ces unités.

A l'inverse d'unités industrielles plus anciennes qui avaient pu connaître de tels problèmes avant l'application de l'enseignement du document FR-A-9409162, la pollution par l'humidité ne touchait pas de manière bien marquée et assez sensible une zone de zéolite proche de la sortie de chaque adsorbeur, i.e. le côté production, mais la totalité de la masse d'adsorbant.

Ainsi, par exemple, avant la mise en oeuvre du dispositif décrit par le document FR-A-9409162, un cas de pollution avait pu être identifié et attribué à la phase de repressuration à contre-courant d'un adsorbeur arrêté systématiquement sous vide, via une vanne fuyarde du côté production, avec de l'oxygène chargé en eau au travers d'une machine de compression de type humide. Une analyse du tamis moléculaire utilisé dans cette unité de production a mis en évidence une pollution massive de la couche supérieure dudit tamis, côté production, par de l'humidité dont la source est, sans aucun doute, l'eau contenue dans la pompe à anneau liquide située à proximité immédiate et en aval de l'unité de production.

Dans le cas, des problèmes rencontrés avec les unités industrielles plus récentes, il s'agit en fait, d'une pollution lente et progressive, c'est-à-dire non pas ponctuelle ou par paliers.

Des mesures et essais opérés sur des unités industrielles ont permis d'en connaître la cause et de comprendre pourquoi ce phénomène n'était pas apparu précédemment sur des unités industrielles plus anciennes.

Cela va être expliqué maintenant en prenant l'exemple d'une unité de type PSA de production d'oxygène à partir d'air comportant deux adsorbeurs mais le phénomène est général et concerne tous les cas de régénération sous vide. De même, le cycle considéré à titre d'exemple correspond à celui décrit par le document US-A-5,223,004 ; toutefois ; ce choix n'est nullement limitatif.

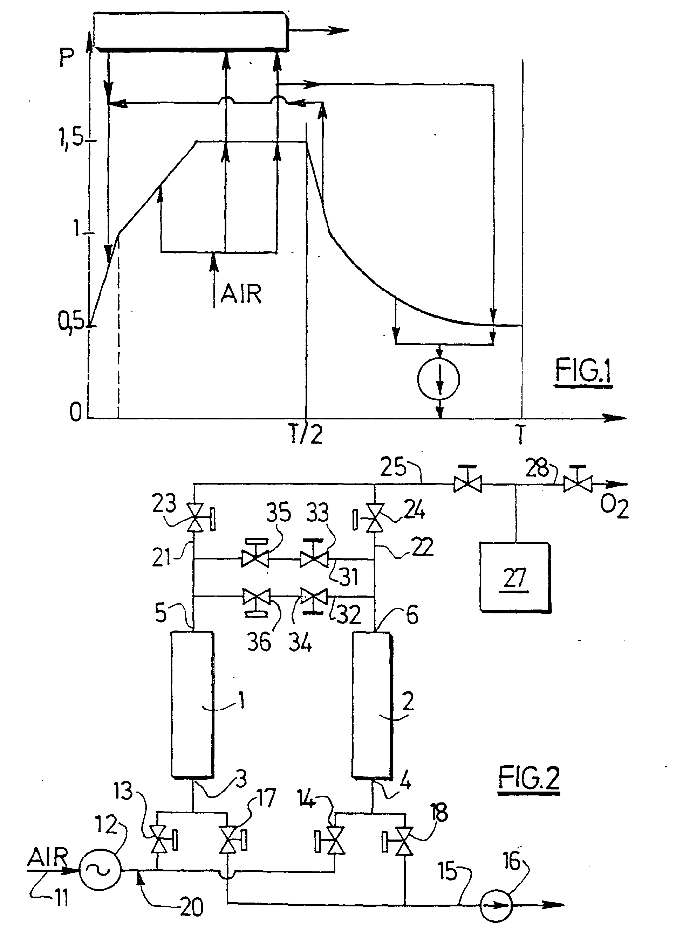

Il est fait référence au document US-A-5,223,004 en particulier les figures 1 et 2 de ce document, ainsi que les passages s'y rapportant, à savoir : colonne 3, lignes 20 à 68 et colonne 4, lignes 1 à 24.

A la lecture de ce document, on comprend que :
- les lignes du côté gaz de production sont régulièrement et cycliquement mises sous vide ;
- il existe plusieurs étapes au cours desquelles de l'oxygène retourne à contre-courant dans les adsorbeurs pendant l'étape de pressurisation initiale, pendant l'étape de pompage de l'oxygène contenu notamment dans lesdites lignes et pendant l'étape d'élution ;
- ce type de cycle rend nécessaire du côté de la sortie production de chaque adsorbeur, un certain nombre de vannes qui, successivement, isolent ou mettent en communication fluidique les divers équipements de l'unité PSA.

Les vannes utilisées sont de type tout-ou-rien, comme celles représentées en figure 2 du document US-A-5,223,004, ou, selon le cas, à ouverture et/ou fermeture contrôlée, en particulier par des rampes.

De façon générale, il est utilisé dès vannes de type papillon qui entraînent de faibles variations de pression lorsque l'ouverture desdites vannes est de l'ordre de 100% et permettent de minimiser la consommation énergétique de l'installation.

En particulier, des vannes de type papillon ont été parfaitement adaptées aux conditions de fonctionnement des unités PSA, c'est-à-dire qu'ont été pris en compte le grand nombre de manoeuvre, la vitesse d'ouverture/fermeture élevée, l'étanchéité nécessaire, les caractéristiques du procédé à mettre en oeuvre......

Parmi les évolutions engendrées par cette adaptation, on peut noter le grand choix de matériaux disponibles pour le siège, les paliers, les étanchéités (métal, élastomère, plastomère, PTFE chargé...), l'amélioration des cinématiques et des sections de passage... A titre d'exemple, le couple nécessaire à l'ouverture et/ou à la fermeture de l'obturateur d'une vanne de type papillon peut être limité en utilisant une cinématique à double excentration. Dans ce cas, l'axe de rotation est décalé par rapport au plan de l'obturateur et excentré par rapport à l'axe de la tuyauterie. Cette conception diminue fortement les frottements entre siège et portée d'étanchéité de l'obturateur. De même, l'arbre de rotation de l'obturateur peut être en deux parties, laissant ainsi la zone centrale libre pour la circulation du fluide, ce qui a pour effet de diminuer les pertes de charge à travers la vanne.

De façon générale, les étanchéités vis-à-vis du milieu extérieur au passage de l'arbre de rotation sont de type varié et mettent en oeuvre les diverses techniques (tresse, joint torique, joint en V, double étanchéité....) et matériaux connus.

Sur certains modèles de vannes, les paliers sont facilement remplaçables y compris le palier opposé à l'axe de manoeuvre qui peut constituer, par exemple, une cartouche facilement démontable sans avoir à ouvrir ou démonter la vanne proprement dite.

Malgré toutes ces adaptations, il est apparu au cours des essais effectués sur les unités industrielles que c'est au niveau de ces étanchéités vis-à-vis du milieu extérieur, c'est-à-dire de l'atmosphère ambiante, que résidait le problème de la baisse des performances au cours du temps rencontrées sur les unités PSA les plus récentes.

En fait, le vieillissement prématuré de l'adsorbant, en particulier des particules de zéolites, peut s'expliquer par l'évolution actuelle des unités PSA, en particulier des unités PSA de séparation d'air.

En effet, les unités PSA récentes se caractérisent par une utilisation de tamis moléculaire, c'est-à-dire d'adsorbant, de plus en plus performant et par la réduction des temps de cycle.

En reprenant l'exemple de la séparation d'air pour produire de l'oxygène, il s'est produit une évolution depuis des unités PSA mettant en oeuvre des adsorbants de type zéolite 13X ou 5A et fonctionnant avec des temps de cycle de plusieurs minutes vers des unités PSA mettant en oeuvre des adsorbants de type zéolite X ou LSX échangée par des cations métallique, tel le lithium, et fonctionnant avec des temps de cycle de l'ordre de quelques dizaine de secondes, typiquement moins de 90 secondes.

L'augmentation intrinsèque de la productivité du matériau adsorbant couplée avec la réduction du temps de cycle conduit à utiliser actuellement entre 5 et 10 fois moins de zéolite qu'une unité classique, telle une unité mettant en oeuvre des adsorbants de type zéolite 13X ou 5A, et ce, pour une même production.

On notera, d'ailleurs, que c'est cette réduction substantielle des quantités d'adsorbant nécessaire qui a permis de diminuer le coût de l'investissement car les nouveaux matériaux, plus élaborés, peuvent coûter entre environ 3 à 6 fois plus que les matériaux plus classiques, telle la zéolite 13X ou 5A.

Par ailleurs, à production donnée, les autres équipements ont relativement peu changé de taille, en particulier les lignes de tuyauterie du côté de la sortie production des adsorbeurs ; les débits en circulation étant toujours du même ordre de grandeur.

De là, en reprenant l'exemple du cycle MPSA cité ci-avant, on comprend que si les quantités de gaz échangées au cours de chaque étape sont plus faible du fait de la réduction du volume d'adsorbant, les débits quant à eux sont pratiquement inchangés du fait de la réduction de la durée de ces mêmes étapes. A même perte de charge et pour une production donnée, il est donc normal que le diamètre des tuyauteries soit inchangé.

En pratique, les performances intrinsèques des unités s'étant améliorées conjointement avec l'évolution du tamis, les pertes énergétiques dues aux pertes de charge dans le système ont pris en proportion plus d'importance qu'auparavant et la tendance à plutôt été de les diminuer, c'est-à-dire d'augmenter le diamètre de certaines tuyauteries.

De manière générale, on peut retenir que l'évolution des unités PSA a conduit à installer des quantités d'adsorbant de plus en plus faible tout en maintenant des circuits de liaison de dimensions inchangées.

D'autre part, il découle de ce qui précède que le nombre de manoeuvres de vannes n'a fait qu'augmenter pendant cette évolution, en première approximation de façon inversement proportionnelle à la durée de cycle.

A vannes identiques, le vieillissement des étanchéités est donc nettement plus rapide sur les unités récentes.

Les entrées d'air atmosphérique humide vers les circuits procédés sous vide à travers ces étanchéités, que l'on peut observer au bout de deux ou trois mois de service, correspondent maintenant, à technologie égale par ailleurs, à celles que l'on obtenait précédemment au bout d'un ou deux ans.

Du fait des échanges gazeux entre adsorbeurs, l'essentiel de cette humidité va préférentiellement se piéger et s'accumuler sur l'adsorbant, en particulier la zéolite, au lieu d'être entraîné et évacué par le flux de production.

Or, la puissance de régénération qui est mise en oeuvre dans toute unité PSA, qui est nécessaire pour assurer un fonctionnement cyclique de unité, tend à répandre cette humidité, à partir de la zone de zéolite située en sortie d'adsorbeur, dans toute la masse de l'adsorbant conduisant ainsi progressivement à une pollution touchant toute la masse d'adsorbant.

En d'autres termes, les unités PSA récentes voient s'accumuler une quantité significative d'humidité sur le tamis qu'elles contiennent dans leurs adsorbeurs, du fait de la taille inchangée des vannes et de leur vieillissement prématuré dû à l'augmentation du nombre de manoeuvres, cette accumulation étant d'autant plus néfaste que le volume d'adsorbant utilisé est réduit, ce qui est le cas avec les unités récentes.

L'effet des traces d'humidité étant au moins aussi sensible pour les nouveaux adsorbants, telles les zéolites Li-X ou Li-LSX, que pour les adsorbants plus classiques, telles les zéolites 13X ou 5A, on conçoit que la baisse de performance pour une même durée de fonctionnement, 6 mois ou un an par exemple, puisse être supérieure en moyenne d'un ordre de grandeur pour les unités actuelles récentes à cycle court et utilisant un adsorbant zéolitique performant que pour les unités classiques, et donc se faire sentir quelques mois seulement après la mise en service alors que ce phénomène passait inaperçu, auparavant.

Une première solution évidente pour résoudre ce problème d'étanchéité des vannes et d'entrée néfaste d'humidité consiste à utiliser des vannes adéquates, c'est-à-dire totalement étanches vis-à-vis de l'extérieur.

Plusieurs types de vannes répondant à ces critères ont été développées pour diverses applications et on peut citer, par exemple, les vannes équipées de soufflets.

Toutefois, ces vannes "étanches" sont généralement de coût élevé, moins facilement disponibles dans le commerce que les vannes classiques, souvent peu ou mal adaptées aux cycles courts des unités PSA et de démontage compliqué en vue de leur entretien du fait de leur système d'étanchéité complexe.

De plus, remplacer toutes les vannes "non-étanches" par des vannes "étanches" sur une unité PSA industrielle déjà en fonctionnement et pour laquelle se pose le problème de la perte de performance de l'adsorbant mentionné ci-dessus n'est pas envisageable car un tel remplacement serait complexe à réaliser et de coût très élevé, d'autant qu'il rend obligatoire un arrêt total de l'unité PSA et donc de la production de gaz pendant toute la durée de l'intervention visant à ce remplacement, en engendrant par là-même des pertes importantes de productivité pendant plusieurs jours ou plusieurs semaines, voire plusieurs mois.

En outre, une régénération in situ du tamis pollué est théoriquement possible mais les coûts entraînés par une telle régénération sont tels que cette solution n'est généralement pas retenue sauf cas particulier.

En effet, pour régénérer une telle zéolite, il faut la balayer pendant plusieurs heures avec un gaz essentiellement sec à température élevée, de l'ordre de 250 à 350°C.

Il peut être, par ailleurs, nécessaire avec certains adsorbants particuliers, telles les zéolites par exemple, de respecter aussi des vitesses de montée en température et des paliers à température intermédiaire pour éviter de dégrader la phase zéolitique.

Ceci suppose que les équipements soient mécaniquement adaptés pour de telles températures élevées alors qu'ils fonctionnement normalement à ou autour de la température ambiante (< 50°C), ce qui en soi engendre des surcoûts non négligeables sur les matériaux....

La nécessité d'installer un réchauffeur, de disposer d'un gaz sec ... fait qu'en pratique, une charge de zéolite polluée par de l'eau est généralement retirée de l'unité de production où elle se trouve, pour être remplacée par une charge nouvelle de zéolite, ce qui s'avère particulièrement coûteux pour les zéolites les plus performantes, par exemples les zéolites échangées avec des cations métalliques.

Ces diverses solutions sont donc toutes très onéreuses, voire irréalistes, pour certaines, à l'échelle industrielle.

De là, la présente invention vise à résoudre le problème de l'inactivation et de la détérioration progressive de l'adsorbant par accumulation sur celui-ci d'humidité atmosphérique, c'est-à-dire d'eau, résultant d'entrées d'humidité de par le manque d'étanchéité des vannes de manoeuvre agencées sur les tuyauteries de l'unité PSA, dans laquelle est installé l'adsorbant.

En d'autres termes, la présente invention entend améliorer les installations et les procédés de traitement de gaz par adsorption, en particulier de purification ou séparation d'air par adsorption, de manière à éviter toute pollution et accumulation lente et progressive de l'adsorbant par de la vapeur d'eau atmosphérique dont l'entrée dans l'unité de séparation de gaz est rendue possible de par le manque d'étanchéité des vannes de manoeuvre.

La solution apportée par la présente invention est particulièrement avantageuse au plan industriel car elle permet non seulement de résoudre le problème ci-dessus, c'est-à-dire de supprimer ou minimiser le vieillissement prématuré des adsorbants, en particulier des particules de zéolite, de manière à maintenir des performances élevées des unités de séparation de gaz, en particulier des unités PSA de séparation d'air, mais aussi de continuer à utiliser des vannes classiques, telles les vannes de type papillon susmentionnées, même si celles-ci ne sont pas d'une étanchéité parfaite.

La présente invention concerne une installation de traitement de gaz comprenant :
- au moins un récipient de traitement de gaz contenant au moins un adsorbant, ledit récipient comportant au moins un orifice,
- au moins une canalisation de gaz communiquant avec ledit orifice,
- au moins une vanne agencée sur ladite canalisation de gaz et contrôlant la circulation du gaz circulant dans ladite canalisation, ladite vanne comprenant des moyens de manoeuvre de la vanne et des moyens d'étanchéité,
caractérisée en ce que des moyens de maintien d'une atmosphère gazeuse protectrice sont agencés autour d'au moins une partie des moyens d'étanchéité de ladite vanne pour permettre de créer et/ou maintenir une atmosphère gazeuse protectrice autour d'au moins une partie des moyens d'étanchéité de ladite vanne.

Selon le cas, l'installation de l'invention peut comprendre l'une ou plusieurs des caractéristiques suivantes :
- lesdits moyens de maintien d'une atmosphère gazeuse protectrice comportent une enceinte formant manchon autour d'au moins une partie des moyens d'étanchéité de ladite vanne.
- ladite enceinte englobe au moins une partie des moyens d'étanchéité et au moins une partie des moyens de manoeuvre de la vanne.
- la paroi de l'enceinte formant manchon est percée d'au moins un orifice communiquant avec au moins une ligne d'amenée d'un gaz de protection reliée avec au moins une source de gaz de protection pour permettre d'alimenter l'intérieur de ladite enceinte avec au moins une partie du gaz de protection issu de ladite source de gaz de protection.
- la source de gaz de protection est un récipient de traitement de gaz.
- l'enceinte formant manchon est composée d'un boîtier formé de plusieurs parois, solidaires les unes des autres, de préférence le boîtier est formé d'au moins une paroi périphérique, d'un fond et d'un couvercle ou d'un plafond. Selon le cas, la paroi périphérique peut être constituée d'une paroi unique, telle une paroi cylindrique ou analogue, ou se composer de plusieurs parois fixées les unes aux autres, par exemple quatre parois agencées en un carré, en un rectangle ou analogue.
- elle est choisie parmi les installations de type PSA ou TSA, c'est-à-dire adsorption avec variations de température, dont le fonctionnement met en oeuvre au moins une étape de régénération sous vide, c'est-à-dire à une pression inférieure à la pression atmosphérique (< 10⁵ Pa). Par exemple, une installation PSA ou TSA comportant de 1 à 3 adsorbeurs, de préférence des adsorbeurs à géométrie radiale, c'est-à-dire à circulation de fluide radiale centrifuge ou centripète, lesdits adsorbeurs fonctionnant en alternance.

L'invention porte, en outre, sur un procédé pour éviter et/ou minimiser la pollution d'un adsorbant par au moins une impureté présente dans l'air ambiant contenu dans au moins un récipient de traitement de gaz d'une installation de traitement de gaz comprenant :
- au moins ledit récipient de traitement de gaz contenant au moins ledit adsorbant, ledit récipient comportant au moins un orifice,
- au moins une canalisation de gaz communiquant avec ledit orifice,
- au moins une vanne agencée sur ladite canalisation de gaz et contrôlant la circulation du gaz circulant dans ladite canalisation, ladite vanne comprenant des moyens de manoeuvre de la vanne et des moyens d'étanchéité,
dans lequel on agence des moyens de maintien d'une atmosphère gazeuse protectrice autour d'au moins une partie des moyens d'étanchéité de ladite vanne pour permettre de créer et/ou maintenir une atmosphère gazeuse protectrice autour d'au moins une partie des moyens d'étanchéité de ladite vanne.

Selon le cas, le procédé de l'invention peut comprendre l'une ou plusieurs des caractéristiques suivantes :
- l'atmosphère gazeuse protectrice est créée et maintenue en opérant un balayage gazeux d'au moins une partie des moyens d'étanchéité de ladite vanne au moyen d'un gaz de protection substantiellement exempt de ladite impureté.
- les moyens de maintien d'une atmosphère gazeuse protectrice comprennent au moins une enceinte formant manchon autour d'au moins une partie des moyens d'étanchéité de ladite vanne, ladite enceinte formant manchon contenant un gaz de protection substantiellement exempt de ladite impureté, de préférence on introduit ledit gaz de protection dans ladite enceinte formant manchon par au moins un orifice d'entrée de gaz de protection aménagé dans au moins une paroi de ladite enceinte.
- la pression du gaz de protection introduit dans l'enceinte est supérieure à la pression atmosphérique locale ou, plus généralement, à la pression extérieure à la vanne si celle-ci se trouve, par exemple, dans un local en surpression par rapport à la pression atmosphérique locale. Cette surpression peut être limitée à quelques millibars ou quelques dizaine de millibars, de préférence entre 10 mbars et 100 mbars.
- l'impureté est choisie parmi la vapeur d'eau et le dioxyde de carbone, de préférence la vapeur d'eau.
- le gaz de protection est choisie parmi l'air sec, l'azote, l'oxygène ou un mélange d'azote et d'oxygène essentiellement exempt d'humidité ou contenant une quantité non significative de vapeur d'eau, c'est-à-dire une quantité si infime qu'elle n'a pas ou que peu d'influence sur la zéolite.
- l'installation est de type PSA, en particulier VSA, comportant des moyens de régénération par mise sous vide au moins partiel et produisant de l'oxygène ou de l'azote à partir d'air, ou produisant de l'air débarrassé de ses principaux polluants atmosphériques (eau, CO₂...).
- le gaz de protection contient ou est constitué d'une partie de l'oxygène, de l'azote, d'un mélange azote/oxygène ou d'air débarrassé de ses principaux polluants atmosphériques produit par ou prélevé dans l'installation PSA ou VSA comportant des moyens de régénération par mise sous vide au moins partiel. De façon connue, dans le cas d'un procédé PSA ou VSA, la pression haute d'adsorption est comprise entre 1 bar et 100 bars, de préférence de l'ordre de 1 à 30 bars.
- la pression basse de désorption, c'est-à-dire de régénération, est comprise entre 0.1 bar et environ 1 bar.
- la température d'alimentation est comprise entre -50°C et +200°C.
- la température d'alimentation est comprise entre 10°C et 80°C, de préférence entre 25°C et 60°C.
- le gaz à traiter est un mélange gazeux contenant essentiellement de l'azote et de l'oxygène, notamment l'air ; un mélange gazeux contenant essentiellement de l'hydrogène et/ou du monoxyde de carbone ; un mélange gazeux contenant essentiellement un ou plusieurs hydrocarbures, notamment des oléfines ; ou un mélange gazeux contenant du dioxyde de carbone.
- l'adsorbant comporte des particules choisies parmi les zéolites et les alumines.
- le fluide à traiter est un mélange gazeux contenant essentiellement de l'azote et de l'oxygène,
- l'adsorbant est une zéolite, de préférence, choisie parmi les faujasites ou les zéolites A, avantageusement une zéolite X ayant un rapport Si/AI de approximativement 1 à 1.25, une telle zéolite est appelée zéolite X ou LSX (Low Silica X) ou zéolite pauvre en silice. Une telle zéolite X peut contenir au moins 80% de cations Li⁺, de préférence au moins 86%, et/ou au plus 96% de cations Li⁺, et/ou au plus 15% de cations Na⁺, de préférence au plus 14%, préférentiellement encore au plus 12%, et/ou au moins 4% de cations Na⁺, et/ou au plus 5% de cations Mg²⁺, de préférence au plus 2%, et/ou au moins 0.1 % de cations Mg²⁺, de préférence au moins 0.2%, et/ou au plus 8% de cations Ca²⁺, de préférence au plus 5%, et/ou au moins 0.2 % de cations Ca²⁺, de préférence au moins 1%, et/ou au plus 3% de cations K⁺, de préférence au plus 1%, préférentiellement, au plus 0.5%.

L'invention va maintenant être décrite plus en détail à l'aide des figures annexées, données à titre illustratif mais non limitatif.

La figure 2 représente un schéma d'une installation classique de traitement de gaz conforme à l'enseignement du document US-A-5,223,004 et, plus précisément, une installation de séparation d'air par mise en oeuvre d'un procédé de type PSA dont le cycle de fonctionnement est schématisé sur la figure 1 et également expliqué par le document US-A-5,223,004.

Une telle installation PSA comprend deux récipients de traitement de gaz, communément appelés adsorbeurs 1, 2, contenant chacun un adsorbant, par exemple des particules de zéolite X échangée à plus de 85 % par des cations lithium ; l'adsorbant pouvant être disposé en un seul lit ou, selon le cas, réparti en plusieurs lits contenant l'adsorbant ou plusieurs couches contenant des adsorbants de natures différentes ou ayant des propriétés différentes, tel que décrit par exemple par le document US-A-5,922,107.

Chaque adsorbeur 1, 2 comporte au moins un orifice d'entrée de gaz 3,4 permettant l'introduction dans l'adsorbeur 1,2 du gaz à traiter, ici de l'air comprimé, et au moins un orifice de sortie de gaz 5, 6, respectivement, permettant l'évacuation de l'adsorbeur 1,2 du gaz produit ou traité, ici de l'oxygène ou un mélange gazeux riche en oxygène, c'est-à-dire contenant au moins 85% d'oxygène.

L'air atmosphérique est aspiré (en 11) par l'entrée d'un compresseur 12, comprimé par ce compresseur 12 à une pression supérieure à 1 bar, par exemple environ 1,5 bars, avant d'être acheminé, via une ou plusieurs canalisation 20 de gaz, jusqu'à l'un ou l'autre des adsorbeurs 1 ou 2 dans lequel il est introduit par l'orifice d'entrée de gaz 3 ou 4, respectivement.

En outre, une autre canalisation 15 est reliée à la canalisation 20, ladite autre canalisation 15 servant durant les étapes de désorption et purge à contre-courant des adsorbeurs 1, 2.

La canalisation 15 comprend une pompe à vide 16 utilisée pour soutirer le gaz présent dans les adsorbeurs de manière à amener lesdits adsorbeurs à la pression basse du cycle, par exemple 0,35 bar.

Comme on le voit sur la figure 2, plusieurs vannes 13, 17, 14, 18 sont agencées sur lesdites canalisations 20 et 15 de gaz et y contrôlent la circulation du gaz.

Côté production, les canalisations 21 et 22 alimentent, via les vannes 23 et 24, la canalisation de production 25 puis la capacité-tampon 27 et la ligne 28 d'envoi du gaz de production vers le site utilisateur.

Les lignes 31 (avec les vannes 33 et 35) et 32 (avec les vannes 34 et 36) servent, respectivement, à effectuer les étapes d'équilibrage entre adsorbeurs et d'élution.

On notera qu'en variante, les vannes 35 et/ou 36 peuvent être équipées d'un dispositif de réglage d'ouverture rendant inutile, dans ce cas, la présence des vannes 33 et 34.

En considérant la figure 2, l'invention va s'appliquer préférentiellement aux vannes 23, 24, 33 à 36, généralement de type papillon, situées sur des circuits en liaison avec le côté production des adsorbeurs.

Toutes ces vannes 23, 24, 33 à 36 voient, pendant le cycle de production, des pressions inférieures à la pression atmosphérique, c'est-à-dire sous vide, et c'est donc par l'intermédiaire de ces vannes 23, 24, 33 à 36 que, lors des phases sous vide, la plupart de l'humidité ou les autres polluants atmosphériques peuvent pénétrer dans le circuit de canalisations de l'unité PSA et donc subséquemment aller polluer l'adsorbant, c'est-à-dire la zéolite contenue dans les adsorbeurs 1,2.

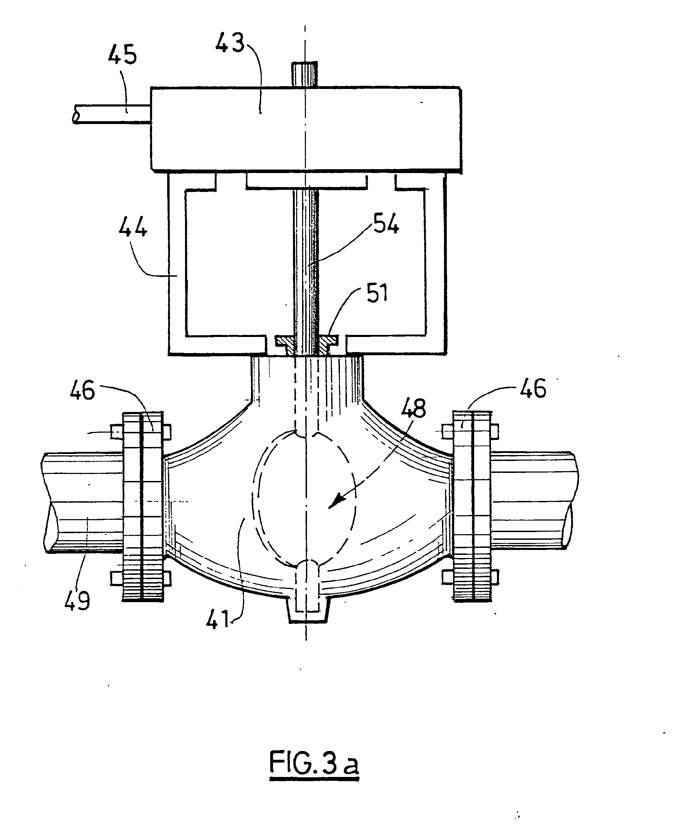

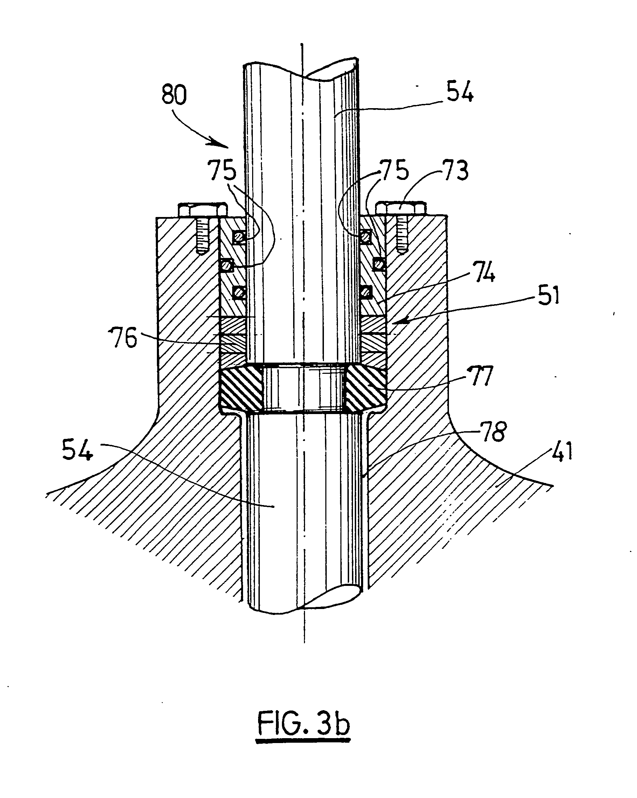

La figure 3a représente un schéma de principe de ces vannes 23, 24, 33 à 36 et un mode de réalisation d'une étanchéité de type classique est représenté sur la figure 3b, c'est-à-dire que la figure 3b schématise la manière dont l'étanchéité des vannes 23, 24, 33 à 36 est habituellement assurée.

Bien que de nombreuses variantes de réalisation de vannes existent compte tenu de leur diversité d'architecture, de façon simplifiée et sensiblement générale comme montré sur la figure 3a, chaque vanne comporte classiquement un corps de vanne 41 surmonté d'une partie 44 formant arcade et comprenant, par ailleurs, un actionneur 43, un arbre de manoeuvre 54, un système d'étanchéité 51 de l'arbre 54 et des brides de raccordement 46 permettant de recevoir les extrémités de deux canalisations 49.

Plus précisément, l'actionneur 43 d'une vanne de permet de manoeuvrer l'obturateur 48 via l'arbre de manoeuvre 54, de manière à ouvrir ou fermer la vanne, c'est-à-dire autoriser ou interdire tout passage de fluide.

L'actionneur 43 surmontant la partie 44 formant arcade est actionné pneumatiquement au moyen d'air instrument acheminé jusqu'à la vanne par une canalisation 45 d'amenée d'air instrument.

L'étanchéité entre le circuit de canalisation de l'installation PSA et le milieu extérieur s'effectue par le système 51 d'étanchéité de l'arbre 54.

De façon classique, un tel système d'étanchéité 51 doit limiter des possibilités de communication de fluides entre le circuit de canalisation de l'installation PSA et le milieu extérieur 80, tout en autorisant une manoeuvre aisée de l'arbre 54, c'est-à-dire ici sa rotation autour de son axe.

De là, comme détaillé sur la figure 3b, il est usuel qu'un tel système d'étanchéité 51 se compose d'une série de garnitures 76 portés par une butée 77 et de joints 75 toriques placés dans un porte-joint 74, le tout étant partiellement fixé au corps de vanne 41 et comprimé par des vis de serrage 73 ou analogues, de manière à limiter des échanges entre, d'une part, le fluide procédé présent au niveau du jeu ou espace 78 existant entre le corps de vanne 41 et l'arbre de manoeuvre 54 et, d'autre part, le milieu extérieur 80 ambiant.

Conformément à la présente invention, dans le but de créer et maintenir une atmosphère gazeuse protectrice autour d'au moins une partie des moyens d'étanchéité 51 d'au moins une des vannes 23, 24 et 33 à 36, des moyens de maintien 52 d'une atmosphère gazeuse protectrice sont agencés autour des moyens d'étanchéité 51 d'au moins une des vannes 13, 17, 14, 18.

A titre d'exemple, on considérera la vanne 35.

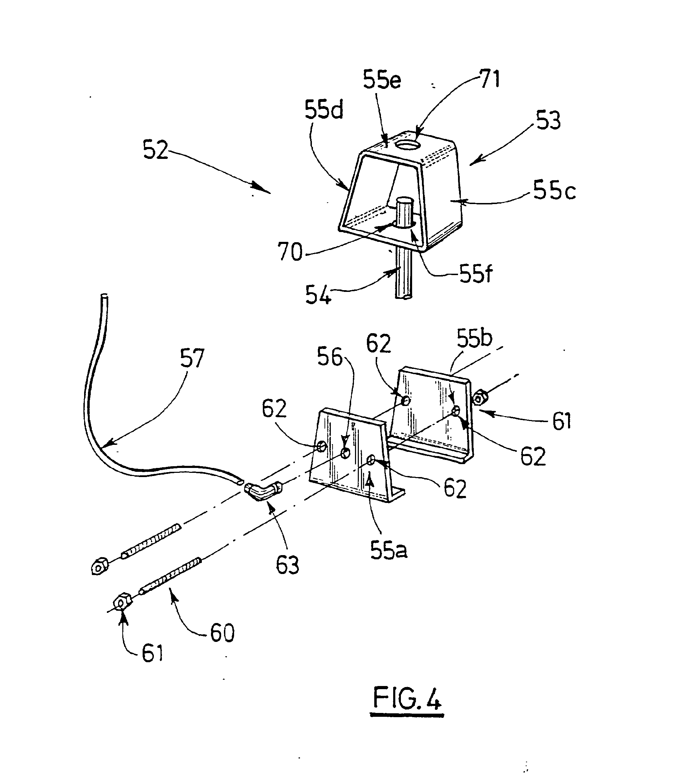

Ainsi que schématisé sur la figure 4, les moyens de maintien 52 d'une atmosphère gazeuse protectrice comportent une enceinte 53 formant manchon autour des moyens d'étanchéité 51 de la vanne 35, en englobant éventuellement au moins une partie des moyens de manoeuvre de la vanne 35, en particulier une partie de l'arbre de manoeuvre 54 et la partie extérieure du système d'étanchéité 51 de l'arbre 54.

Dans ce cas, l'enceinte 53 est formée de quatre parois latérales périphériques 55a, 55b, 55c, 55d, d'une paroi formant plafond ou couvercle 55e et d'une paroi formant un fond 55f.

Ici, les parois latérales périphériques 55c, 55d, le couvercle 55e et le fond 55f sont solidaires les unes des autres et forme une structure tridimensionnelle unique creuse, alors que les parois latérales 55a, 55b sont fixées sur cette structure tridimensionnelle creuse par des moyens de fixation appropriés, par exemple à l'aide de tiges filetées 60 et de boulons 61, des orifices 62 percés dans les parois latérales 55a, 55b permettant de faire passer les tiges filetées 60 au travers de la structure tridimensionnelle creuse.

La paroi 55a latérale de l'enceinte 53 est percée d'un orifice 56 de passage de gaz communiquant avec une ligne 57 d'amenée de gaz de protection reliée à une source de gaz de protection (non représentée) pour permettre d'alimenter l'intérieur de ladite enceinte 53 avec du gaz de protection provenant de ladite source de gaz de protection, telle une capacité de stockage, une unité de production d'air "instrument" ou un des adsorbeurs 1, 2.

La fixation de ligne 57 d'amenée de gaz de protection à la paroi 55a latérale de l'enceinte 53 est réalisée au moyen d'une pièce coudée 63 creuse.

Comme on peut le comprendre au vu de la figure 4, le couvercle 55e et le fond 55f de la structure tridimensionnelle creuse comportent des perçages 71, 70, respectivement, traversés par l'arbre de manoeuvre 54.

Selon la présente invention, le maintien d'une atmosphère gazeuse protectrice autour des moyens d'étanchéité 51 de la vanne 35 pour permettre de créer et/ou maintenir une atmosphère gazeuse protectrice des moyens d'étanchéité 51 se fait préférentiellement en opérant un balayage gazeux des moyens d'étanchéité 51 au moyen du gaz de protection introduit par l'orifice 56 dans l'enceinte 53.

Il va de soi qu'on utilise en tant que gaz de protection, un gaz ou un mélange gazeux substantiellement exempt de la ou des impuretés néfastes, par exemple un gaz ou un mélange gazeux exempt de vapeur d'eau, par exemple de l'air sec ou de l'oxygène asséché, lorsque l'impureté à combattre est la vapeur d'eau.

Toutefois, on utilise avantageusement de l'air "instrument" sec et déshuilé disponible sur le site où est installé l'unité PSA en tant que gaz de protection car cela est particulièrement simple à réaliser et économique.

De façon connue, on appelle air "instrument" de l'air comprimé sous une pression, par exemple, de l'ordre de 8 bars, filtré, déshuilé séché par l'intermédiaire d'équipements adéquats et utilisé comme fluide-moteur pour manoeuvrer les vannes via des actionneurs ou pour l'instrumentation pneumatique.

La pression du gaz de protection introduit dans l'enceinte 53 est préférablement supérieure à la pression atmosphérique, en général la surpression étant de l'ordre de 10 à 100 mbar supérieure à la pression atmosphérique.

Lorsque les parois 55a et 55b sont fixées à la structure tridimensionnelle, l'enceinte 53 ainsi formée est creuse et relativement étanche, et les impuretés atmosphériques, en particulier la vapeur d'eau, ne peuvent pas y pénétrer de par la surpression engendrée par l'introduction du gaz de protection dans l'enceinte 53.

En variante ou en complément, il est possible d'utiliser un matériau présentant une forte affinité pour l'impureté dont on souhaite éviter l'introduction dans le circuit de l'installation PSA, par exemple l'humidité. Ainsi, on pourrait remplir totalement ou partiellement l'enceinte 53, par exemple, avec un matériau dessiccant du type gel de silice ou alumine activée, lequel pourrait être remplacé périodiquement pour éviter sa saturation. La facilité d'intervention sur une unité industrielle permet d'envisager des remplacements fréquents de ce matériau. De façon générale, utiliser un tel matériau peut venir complémenter l'introduction d'un balayage gazeux de protection soit à titre de sécurité en cas d'arrêt momentané de fourniture de gaz de protection, soit pour diminuer la quantité résiduelle d'impuretés susceptibles d'être présentes dans le gaz de protection utilisé.

## Revendications

1. Installation de traitement de gaz fonctionnant par cycle de traitement, dont au moins une partie dudit cycle est opérée à une pression inférieure à la pression atmosphérique, comprenant :
- au moins un récipient de traitement (1, 2) de gaz contenant au moins un adsorbant, ledit récipient (1, 2) comportant au moins un orifice (5, 6),
- au moins une canalisation (21, 22, 31, 32) de gaz communiquant avec ledit orifice (5, 6),
- au moins une vanne (23, 24, 33 à 36) agencée sur ladite canalisation (21, 22, 31, 32) de gaz et contrôlant la circulation du gaz circulant dans ladite canalisation (21, 22, 31, 32), ladite vanne (23, 24, 33 à 36) comprenant des moyens de manoeuvre (43, 54) de la vanne et des moyens d'étanchéité (51, 74 à 76),
**caractérisée en ce que** des moyens de maintien (53, 55a à 55f) d'une atmosphère gazeuse protectrice sont agencés autour d'au moins une partie des moyens d'étanchéité (51, 74 à 76) de ladite vanne (23, 24, 33 à 36) pour permettre de créer et/ou maintenir une atmosphère gazeuse protectrice autour d'au moins une partie des moyens d'étanchéité (51, 74 à 76) de ladite vanne (23, 24, 33 à 36).

2. Installation selon la revendication 1, **caractérisée en ce que** lesdits moyens de maintien (53, 55a à 55f) d'une atmosphère gazeuse protectrice comportent une enceinte (53) formant manchon autour d'au moins une partie des moyens d'étanchéité (51, 74 à 76) de ladite vanne (23, 24, 33 à 36).

3. Installation selon l'une des revendications 1 ou 2, **caractérisée en ce que** ladite enceinte (53) englobe au moins une partie des moyens d'étanchéité (51, 74 à 76) et au moins une partie des moyens de manoeuvre (43, 54) de la vanne (23, 24, 33 à 36).

4. Installation selon l'une des revendications 1 à 3, **caractérisée en ce que** la paroi de l'enceinte (53) formant manchon est percée d'au moins un orifice (56) communiquant avec au moins une ligne d'amenée (57) d'un gaz de protection reliée avec au moins une source de gaz de protection pour permettre d'alimenter l'intérieur de ladite enceinte (53) avec au moins une partie du gaz de protection issu de ladite source de gaz de protection.

5. Installation selon l'une des revendications 1 à 4, **caractérisée en ce que** la source de gaz de protection est un récipient de traitement de gaz, un réservoir de stockage ou une unité de production d'air instrument.

6. Installation selon l'une des revendications 1 à 5, **caractérisée en ce que** l'enceinte (53) formant manchon est composée d'un boîtier formé de plusieurs parois (55a à 55f), solidaires les unes des autres, de préférence le boîtier est formé d'au moins une paroi périphérique (55a à 55d), d'un fond (55f) et d'un couvercle (55^{e}), préférentiellement au moins une partie (55a à 55d) desdites parois (55a à 55f) forment une partie de la vanne (23, 24, 33 à 36) et au moins une partie (55a, 55b) desdites parois (55a à 55f) sont des parois additionnelles.

7. Installation selon l'une des revendications 1 à 6, **caractérisée en ce qu'**elle est choisie parmi les installations de type PSA ou TSA.

8. Procédé pour éviter et/ou minimiser la pollution d'un adsorbant par au moins une impureté présente dans l'air ambiant contenu dans au moins un récipient de traitement de gaz d'une installation de traitement de gaz fonctionnant par cycle de traitement, dont au moins une partie dudit cycle est opérée à une pression inférieure à la pression atmosphérique, comprenant :
- au moins ledit récipient de traitement (1, 2) de gaz contenant au moins ledit adsorbant, ledit récipient (1, 2) comportant au moins un orifice (5, 6),
- au moins une canalisation (21, 22, 31, 32) de gaz communiquant avec ledit orifice (5, 6),
- au moins une vanne (23, 24, 33 à 36) agencée sur ladite canalisation de gaz (21, 22, 31, 32) et contrôlant la circulation du gaz circulant dans ladite canalisation, ladite vanne (23, 24, 33 à 36) comprenant des moyens de manoeuvre (43, 54) de la vanne (23, 24, 33 à 36) et des moyens d'étanchéité (51, 74 à 76),
dans lequel on agence des moyens de maintien (53, 55a à 55f) d'une atmosphère gazeuse protectrice autour d'au moins une partie des moyens d'étanchéité de ladite vanne (23, 24, 33 à 36) pour permettre de créer et/ou maintenir une atmosphère gazeuse protectrice autour d'au moins une partie des moyens d'étanchéité (51, 74 à 76) de ladite vanne (23, 24, 33 à 36).

9. Procédé selon la revendication 8, **caractérisé en ce que** l'atmosphère gazeuse protectrice est créée et maintenue en opérant un balayage gazeux d'au moins une partie des moyens d'étanchéité (51, 74 à 76) de ladite vanne (23, 24, 33 à 36) au moyen d'un gaz de protection substantiellement exempt de ladite impureté.

10. Procédé selon l'une des revendications 8 ou 9, **caractérisé en ce que** les moyens de maintien (53, 55a à 55f) d'une atmosphère gazeuse protectrice comprennent au moins une enceinte (53) formant manchon autour d'au moins une partie des moyens d'étanchéité (51, 74 à 76) de ladite vanne (23, 24, 33 à 36), ladite enceinte (53) formant manchon contenant un gaz de protection substantiellement exempt de ladite impureté, de préférence on introduit ledit gaz de protection dans ladite enceinte (53) formant manchon par au moins un orifice d'entrée de gaz de protection aménagé dans au moins une paroi (56) de ladite enceinte (53).

11. Procédé selon l'une des revendications 8 à 10, **caractérisé en ce que** la pression du gaz de protection introduit dans l'enceinte est supérieure à la pression atmosphérique ambiante, de préférence la surpression par rapport à ladite pression atmosphérique étant comprise entre 10 mbars et 100 mbars.

12. Procédé selon l'une des revendications 8 à 11, **caractérisé en ce que** l'impureté est choisie parmi la vapeur d'eau et le CO₂, et/ou **en ce que** le gaz de protection est choisie parmi l'air sec, l'azote, l'oxygène ou un mélange d'azote et d'oxygène.

13. Procédé selon l'une des revendications 8 à 11, **caractérisé en ce que** l'installation est de type PSA, en particulier VSA, produisant de l'oxygène à partir d'air, et **en ce que** le gaz de protection contient ou est constitué d'une partie de l'air instrument servant à actionner au moins une vanne.

## Claims

1. Installation for treating gas working on a treatment cycle, in which at least part of the said cycle is performed at a pressure below atmospheric pressure, comprising:
- at least one gas treatment vessel (1, 2) containing at least one adsorbent, the said vessel (1, 2) having at least one orifice (5, 6),
- at least one gas pipe (21, 33, 31, 32) communicating with the said orifice (5, 6),
- at least one valve (23, 24, 33 to 36) arranged on the said gas pipe (21, 22, 31, 32) and controlling the flow of the gas flowing through the said pipe (21, 22, 31, 32), the said valve (23, 24, 33 to 36) comprising means (43, 54) of operating the valve and sealing means (51, 74 to 76),
**characterized in that** means (53, 55a to 55f) of maintaining a protective gaseous atmosphere are arranged around at least part of the means (51, 74 to 76) of sealing the said valve (23, 24, 33 to 36) to make it possible to create and/or to maintain a protective gaseous atmosphere around at least part of the means (51, 74 to 76) of sealing the said valve (23, 24, 33 to 36).

2. Installation according to Claim 1, **characterized in that** the said means (53, 55a to 55f) of maintaining a protective gaseous atmosphere comprise a chamber (53) forming a sleeve around at least part of the means (51, 74 to 76) of sealing the said valve (23, 24, 33 to 36).

3. Installation according to one of Claims 1 or 2, **characterized in that** the said chamber (53) encompasses at least part of the means (51, 74 to 76) of sealing and at least part of the means (43, 54) of operating the valve (23, 24, 33 to 36).

4. Installation according to one of Claims 1 to 3, **characterized in that** the wall of the chamber (53) forming a sleeve is pierced with at least one orifice (56) communicating with at least one protective-gas supply line (57) connected to at least one source of protective gas so as to allow the inside of the said chamber (53) to be supplied with at least some of the protective gas that originates from the said source of protective gas.

5. Installation according to one of Claims 1 to 4, **characterized in that** the source of protective gas is a gas treatment vessel, a storage tank or a unit for producing instrument air.

6. Installation according to one of Claims 1 to 5, **characterized in that** the chamber (53) forming the sleeve is made up of a box formed of a number of walls (55a to 55f) joined together, and preferably the box is formed from at least one peripheral wall (55a to 55d), a bottom (55f) and a lid (55e), preferably at least some (55a to 55d) of the said walls (55a to 55f) form part of the valve (23, 24, 33 to 36), and at least some (55a, 55b) of the said walls (55a to 55f) are additional walls.

7. Installation according to one of Claims 1 to 6, **characterized in that** it is chosen from installations of the PSA or TSA type.

8. Method for avoiding and/or minimizing the contamination of an adsorbent by at least one impurity present in the ambient air contained in at least one gas treatment vessel of a gas treatment installation operating using a treatment cycle, at least part of which cycle is performed at a pressure below atmospheric pressure, comprising:
- at least the said gas treatment vessel (1, 2) containing at least the said adsorbent, the said vessel (1, 2) having at least one orifice (5, 6),
- at least one gas pipe (21, 22, 31, 32) communicating with the said orifice (5, 6),
- at least one valve (23, 24, 33 to 36) arranged on the said gas pipe (21, 22, 31, 32) and controlling the flow of the gas flowing through the said pipe, the said valve (23, 24, 33 to 36) comprising means (43, 54) of operating the valve (23, 24, 33 to 36) and sealing means (51, 74 to 76),
in which means (53, 55a to 55f) of maintaining a protective gaseous atmosphere are arranged around at least some of the means of sealing the said valve (23, 24, 33 to 36) so as to make it possible to create and/or to maintain a protective gaseous atmosphere around at least part of the means (51, 74 to 76) of sealing the said valve (23, 24, 33 to 36).

9. Method according to Claim 8, **characterized in that** the protective gaseous atmosphere is created and maintained by sweeping at least part of the means (51, 74 to 76) of sealing the said valve (23, 24, 33 to 36) with gas using a protective gas which is substantially free of the said impurity.

10. Method according to either of Claims 8 and 9, **characterized in that** the means (53, 55a to 55f) of maintaining a protective gaseous atmosphere comprise at least one chamber (53) forming a sleeve around at least part of the means (51, 74 to 76) of sealing the said valve (23, 24, 33 to 36), the said chamber (53) forming a sleeve containing a protective gas substantially free of the said impurity, and the said protective gas is preferably introduced into the said chamber (53) forming the sleeve via at least one protective-gas inlet orifice formed in at least one wall (56) of the said chamber (53).

11. Method according to one of Claims 8 to 10, **characterized in that** the pressure of the protective gas introduced into the chamber is higher than the ambient atmospheric pressure, the increase in pressure with respect to the said atmospheric pressure preferably being between 10 mbar and 100 mbar.

12. Method according to one of Claims 8 to 11, **characterized in that** the impurity is chosen from water vapour and CO₂ and/or **in that** the protective gas is chosen from dry air, nitrogen, oxygen or a mixture of nitrogen and oxygen.

13. Method according to one of Claims 8 to 11, **characterized in that** the installation is of the PSA, particularly VSA, type, producing oxygen from air and **in that** the protective gas contains or consists of some of the instrument air used to actuate at least one valve.

## Patentansprüche

1. Vorrichtung zur Gasbehandlung, die mit einem Behandlungszyklus arbeitet, wobei mindestens ein Teil des Zyklus mit einem Druck vorgenommen wird, der niedriger ist als der Luftdruck, umfassend:
- mindestens einen Behälter (1, 2) zur Gasbehandlung, der mindestens einen Adsorber enthält, wobei der Behälter (1, 2) mindestens eine Öffnung (5, 6) enthält,
- mindestens eine Gasleitung (21, 22, 31, 32), die mit der Öffnung (5, 6) in Verbindung steht,
- mindestens ein Ventil (23, 24, 33 bis 36), das auf der Gasleitung (21, 22, 31, 32) angeordnet ist und das die Zirkulation des Gases, das die Leitung (21, 22, 31, 32) durchfließt, regelt, wobei das Ventil (23, 24, 33 bis 36) Mittel zur Bedienung (43, 54) des Ventils und Dichtmittel (51, 74 bis 76) umfasst,
**dadurch gekennzeichnet, dass** Mittel zur Erhaltung (53, 55a bis 55f) einer Schutzgashülle um mindestens einen Teil der Dichtmittel (51, 74 bis 76) des Ventils (23, 24, 33 bis 36) herum angeordnet sind, um die Schaffung und/oder Erhaltung einer Schutzgashülle um mindestens einen Teil der Dichtmittel (51, 74 bis 76) des Ventils (23, 24, 33 bis 36) herum zu ermöglichen.

2. Vorrichtung nach Anspruch 1, **dadurch gekennzeichnet, dass** die Mittel zur Erhaltung (53, 55a bis 55f) einer Schutzgashülle eine Hülle (53) enthalten, die einen Mantel um mindestens einen Teil der Dichtmittel (51, 74 bis 76) des Ventils (23, 24, 33 bis 36) herum bildet.

3. Vorrichtung nach einem der Ansprüche 1 oder 2, **dadurch gekennzeichnet, dass** die Hülle (53) mindestens einen Teil der Dichtmittel (51, 74 bis 76) und mindestens einen Teil der Bedienungsmittel (43, 54) des Ventils (23, 24, 33 bis 36) umfasst.

4. Vorrichtung nach einem der Ansprüche 1 bis 3, **dadurch gekennzeichnet, dass** die Wand der einen Mantel bildenden Hülle (53) von mindestens einer Öffnung (56) durchbohrt ist, die in Verbindung steht mit mindestens einer Leitung (57) zur Zuführung eines Schutzgases, die mit mindestens einer Schutzgasquelle verbunden ist, um die Versorgung des Inneren der Hülle (53) mit mindestens einem Teil des Schutzgases, das aus der Schutzgasquelle stammt, zu ermöglichen.

5. Vorrichtung nach einem der Ansprüche 1 bis 4, **dadurch gekennzeichnet, dass** die Schutzgasquelle ein Behälter zur Gasbehandlung, ein Sammelbehälter oder eine Einheit zur Erzeugung von Instrumentenluft ist.

6. Vorrichtung nach einem der Ansprüche 1 bis 5, **dadurch gekennzeichnet, dass** die einen Mantel bildende Hülle (53) aus einem Gehäuse besteht, das aus mehreren Wänden (55a bis 55f) gebildet ist, die fest miteinander verbunden sind, wobei das Gehäuse vorzugsweise aus mindestens einer Außenwand (55a bis 55d), einem Boden (55f) und einem Deckel (55e) gebildet ist, wobei vorzugsweise mindestens ein Teil (55a bis 55d) der Wände (55a bis 55f) einen Teil des Ventils (23, 24, 33 bis 36) bildet und mindestens ein Teil (55a, 55b) der Wände (55a bis 55f) zusätzliche Wände sind.

7. Vorrichtung nach einem der Ansprüche 1 bis 6, **dadurch gekennzeichnet, dass** sie aus den Vorrichtungen des Typs PSA oder TSA ausgewählt ist.

8. Verfahren zum Vermeiden und/oder Minimieren der Verschmutzung eines Adsorbers durch mindestens eine Verunreinigung, die in der Umgebungsluft vorhanden ist, die in mindestens einem Behälter zur Gasbehandlung einer Gasbehandlungsvorrichtung, die mit einem Behandlungszyklus arbeitet enthalten ist, wobei mindestens ein Teil des Zyklus mit einem Druck vorgenommen wird, der niedriger ist als der Luftdruck, umfassend:
- mindestens den Behälter (1, 2) zur Gasbehandlung, der mindestens den Adsorber enthält, wobei der Behälter (1, 2) mindestens eine Öffnung (5, 6) enthält,
- mindestens eine Gasleitung (21, 22, 31, 32), die mit der Öffnung (5, 6) in Verbindung steht,
- mindestens ein Ventil (23, 24, 33 bis 36), das auf der Gasleitung (21, 22, 31, 32) angeordnet ist und das die Zirkulation des Gases, das die Leitung durchfließt, regelt, wobei das Ventil (23, 24, 33 bis 36) Mittel zur Bedienung (43, 54) des Ventils (23, 24, 33 bis 36) und Dichtmittel (51, 74 bis 76) umfasst,
wobei Mittel zur Erhaltung (53, 55a bis 55f) einer Schutzgashülle um mindestens einen Teil der Dichtmittel des Ventils (23, 24, 33 bis 36) herum angeordnet sind, um die Schaffung und/oder Erhaltung einer Schutzgashülle um mindestens einen Teil der Dichtmittel (51, 74 bis 76) des Ventils (23, 24, 33 bis 36) herum zu ermöglichen.

9. Verfahren nach Anspruch 8, **dadurch gekennzeichnet, dass** die Schutzgashülle **dadurch** erzeugt und erhalten wird, dass ein Spülen mit Gas mindestens eines Teils der Dichtmittel (51, 74 bis 76) des Ventils (23, 24, 33 bis 36) mit Hilfe eines Schutzgases erfolgt, das im Wesentlichen frei von der Verunreinigung ist.

10. Verfahren nach einem der Ansprüche 8 oder 9, **dadurch gekennzeichnet, dass** die Mittel zur Erhaltung (53, 55a bis 55f) einer Schutzgashülle mindestens eine Hülle (53) umfassen, die einen Mantel um mindestens einen Teil der Dichtmittel (51, 74 bis 76) des Ventils (23, 24, 33 bis 36) herum bildet, wobei die einen Mantel bildende Hülle (53) ein Schutzgas enthält, das im Wesentlichen frei von der Verunreinigung ist, wobei das Schutzgas vorzugsweise in die einen Mantel bildende Hülle (53) durch mindestens eine Einlassöffnung für das Schutzgas eingeführt wird, die in mindestens einer Wand (56) der Hülle (53) angeordnet ist.

11. Verfahren nach einem der Ansprüche 8 bis 10, **dadurch gekennzeichnet, dass** der Druck des Schutzgases, das in die Hülle eingeführt wird, größer ist als der umgebende Luftdruck, wobei der Überdruck im Verhältnis zum Luftdruck vorzugsweise zwischen 10 mbar und 100 mbar beträgt.

12. Verfahren nach einem der Ansprüche 8 bis 11, **dadurch gekennzeichnet, dass** die Verunreinigung aus dem Wasserdampf und dem CO₂ ausgewählt ist, und/oder dass das Schutzgas aus Trockenluft, Stickstoff, Sauerstoff oder einer Mischung aus Stickstoff und Sauerstoff ausgewählt wird.

13. Verfahren nach einem der Ansprüche 8 bis 11, **dadurch gekennzeichnet, dass** die Vorrichtung vom Typ PSA, insbesondere VSA, ist, wobei Sauerstoff aus Luft erzeugt wird, und dass das Schutzgas einen Teil der Instrumentenluft, die dazu dient, mindestens ein Ventil zu betätigen, enthält oder daraus besteht.
